# EUROPEAN PATENT APPLICATION

(11) **EP 4 470 827 A1**
(43) Date of publication of application: **04.12.2024**
(21) Application number: 22924046.0
(22) Date of filing: 10.11.2022
(51) Int. Cl.: B60L 58/15, B60L 3/00, B60L 7/14, B60L 15/20, B60L 50/60, H02J 7/00

(54) **ELECTRIC WORK VEHICLE**

(30) Priority: 28.01.2022 JP 2022012240
(71) Applicant: Kubota Corporation, Osaka 556-8601 (JP)
(72) Inventor: TAKASE, Shunya, Sakai-shi, Osaka 590-0908 (JP); KAWABATA, Shinichi, Sakai-shi, Osaka 590-0908 (JP); YAMANAKA, Yukifumi, Sakai-shi, Osaka 590-0908 (JP); OKAZAKI, Kazuto, Sakai-shi, Osaka 590-0908 (JP)
(74) Representative: Müller-Boré & Partner Patentanwälte PartG mbB
(86) International application number: PCT/JP2022/041823
(87) International publication number: WO 2023/145192

(57) **Abstract**

Included are a storage battery 4 configured to be charged and discharged; a motor M drivable by electric power from the storage battery 4; a travel device (10, 11) drivable by the motor M; a regenerative mechanism configured to charge the storage battery 4 with electric power that the motor M generates when the body is decelerated; a charged state detector 22 configured to detect a charged state of the storage battery 4; and a controller 21 configured to, in accordance with the charged state detected by the charged state detector 22, reduce torque of the motor M when the motor M generates the electric power to be supplied to the storage battery 4.

## Description

### Technical Field

The present invention relates to an electric work vehicle including a travel device drivable by a motor.

### Background Art

Patent Literature 1 discloses an electrically operated travel vehicle (electric work vehicle) including a travel device drivable by a motor generator (motor). The travel vehicle includes a battery (travel battery) capable of being charged with electric power generated when the motor is driven in reverse.

### Citation List

### Patent Literature

Patent Literature 1
JP 2015-000679 A

### Summary of Invention

### Technical Problem

A travel battery capable of being charged has a limited capacity for electricity storage. Charging a travel battery when it is fully charged (that is, charged to the upper limit of its capacity for electricity storage) results in the travel battery being overcharged, which may degrade or break down the travel battery.

The present invention has an object of charging a travel battery with electric power (that is, electromotive force) that a motor generates while preventing the travel battery from being overcharged.

### Solution to Problem

In order to attain the above object, an electric work vehicle as an embodiment of the present invention includes: a storage battery configured to be charged and discharged; a motor drivable by electric power from the storage battery; a travel device drivable by the motor; a regenerative mechanism configured to charge the storage battery with electric power that the motor generates when a body of the electric work vehicle is decelerated; a charged state detector configured to detect a charged state of the storage battery; and a controller configured to, in accordance with the charged state detected by the charged state detector, reduce torque of the motor when the motor generates the electric power to be supplied to the storage battery.

The above configuration allows the controller to reduce the torque of the motor in accordance with the charged state of the storage battery to reduce the amount of electricity to be supplied to the storage battery and prevent the storage battery from being overcharged. The above configuration prevents the storage battery from being overcharged, and allows the storage battery to be charged appropriately with electric power (that is, electromotive force) that the motor generates.

The electric work vehicle may alternatively be configured such that the controller reduces the torque to 0 in response to the charged state being a state in which the storage battery is charged to an upper limit of a capacity for electricity storage.

Charging the storage battery when it is fully charged would result in the storage battery being overcharged. The above configuration prevents the storage battery from being charged when it is fully charged, and more appropriately prevents the storage battery from being overcharged. The above configuration allows the storage battery to be charged appropriately with electric power (that is, electromotive force) that the motor generates when the storage battery is not fully charged.

The electric work vehicle may alternatively be configured such that in response to the charged state being a state in which the storage battery is charged to a level equal to or larger than a predetermined proportion of a capacity for electricity storage, the controller reduces the torque in accordance with the proportion.

The above configuration reduces the amount of electric power to be supplied to the storage battery when the storage battery is not yet fully charged, and prevents the storage battery from being fully charged. This more appropriately prevents the storage battery from being overcharged. The above configuration allows the storage battery to be charged appropriately with electric power (that is, electromotive force) that the motor generates when the storage battery is not fully charged.

The electric work vehicle may alternatively be configured such that the controller reduces the torque to 0 in response to the proportion being equal to or larger than 90% of the capacity.

The above configuration allows the storage battery to be charged proactively while the charged rate is less than 90%, and prevents the storage battery from being charged when the charged rate is equal to or larger than 90. This more appropriately prevents the storage battery from being fully charged while keeping the charged rate of the storage battery at a high level. The above configuration allows the storage battery to be charged appropriately with electric power (that is, electromotive force) that the motor generates.

The electric work vehicle may alternatively be configured such that the regenerative mechanism includes a regenerative brake mechanism configured to reduce motive power that the motor transmits to the travel device.

The above configuration allows the electric work vehicle to convert energy generated when the body is braked into electric power and charge the storage battery with the electric power. This allows the storage battery to be charged efficiently.

The electric work vehicle may alternatively further include: a notifier configured to produce a predetermined notification, wherein the controller causes the notifier to produce a notification of at least either the charged state or the reduction of the torque.

The above configuration facilitates the worker recognizing how the storage battery is being charged.

### Brief Description of Drawings

Fig. 1 is a left side view of a tractor.
Fig. 2 is a diagram schematically illustrating the respective example positions of components such as an inverter as viewed from the left.
Fig. 3 is a block diagram illustrating how motive power is transmitted.
Fig. 4 is a block diagram illustrating an example configuration for charging a battery with an electromotive force from a motor.
Fig. 5 is a block diagram illustrating an example configuration of a controller.
Fig. 6 is a flowchart of an example of how to control the torque of a motor in accordance with a charged state.

### Description of Embodiments

The description below deals with an embodiment of the present invention with reference to drawings. Unless otherwise specified, the description below uses terms such as "front" and "forward" to refer to the side indicated with arrow F in the drawings, terms such as "back" and "backward" to refer to the side indicated with arrow B in the drawings, terms such as "upward" and "above" to refer to the side indicated with arrow U in the drawings, and terms such as "downward" and "below" to refer to the side indicated with arrow D in the drawings.

### [Overall Configuration of Tractor]

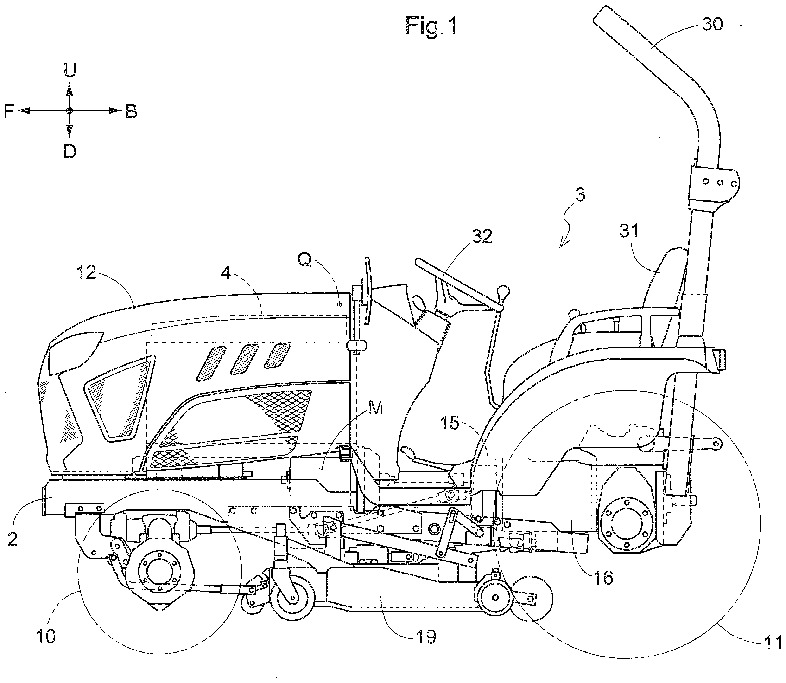

The present embodiment described below is a tractor as an example electric work vehicle. As illustrated in Fig. 1, the tractor includes a pair of left and right front wheels 10, a part of left and right rear wheels 11, and a cover 12.

The tractor includes a body frame 2 and a driver section 3. The body frame 2 is supported by the front and rear wheels 10 and 11.

The cover 12 is at a front portion of the body. The driver section 3 is backward of the cover 12. In other words, the cover 12 is forward of the driver section 3.

The driver section 3 includes a protective frame 30, a driver's seat 31, and a steering wheel 32. An operator is able to enter the driver section 3 and sit on the driver's seat 31. The operator operates the steering wheel 32 to change the direction of the front wheels 10. The operator also performs other driving operations in the driver section 3.

The tractor includes a travel battery 4. The cover 12 is swingable about an open/close axis Q extending laterally relative to the body. The cover 12 is thus capable of being opened and closed. The cover 12, when in the closed state, covers the travel battery 4.

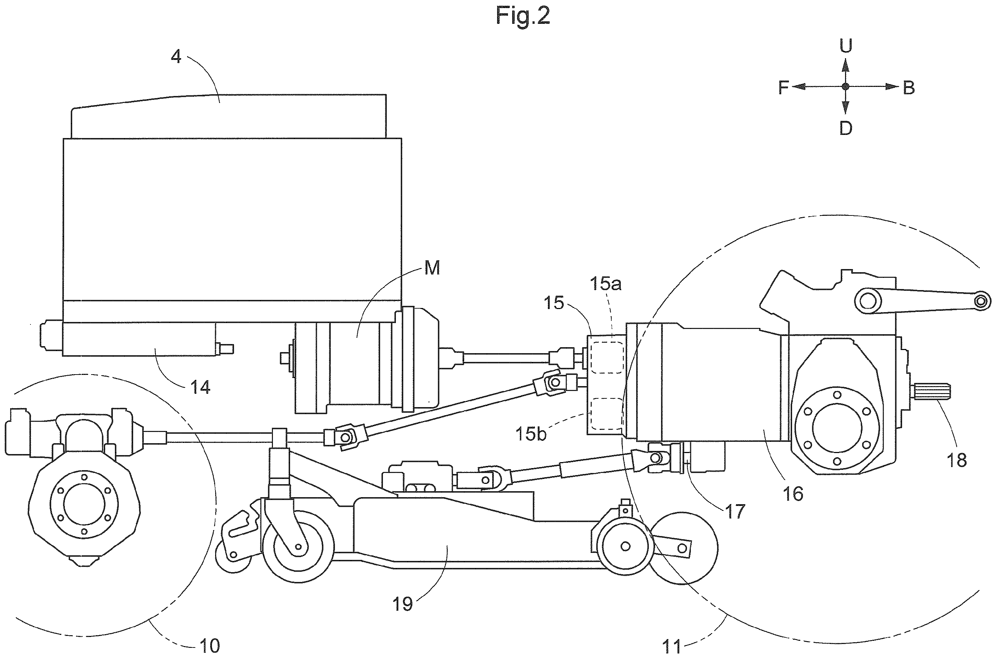

As illustrated in Fig. 2, the tractor includes an inverter 14 and a motor M. The travel battery 4 supplies electric power to the inverter 14. The inverter 14 converts direct-current electric power from the travel battery 4 into alternating-current electric power, and supplies the alternating-current electric power to the motor M. The motor M is driven by alternating-current electric power supplied by the inverter 14.

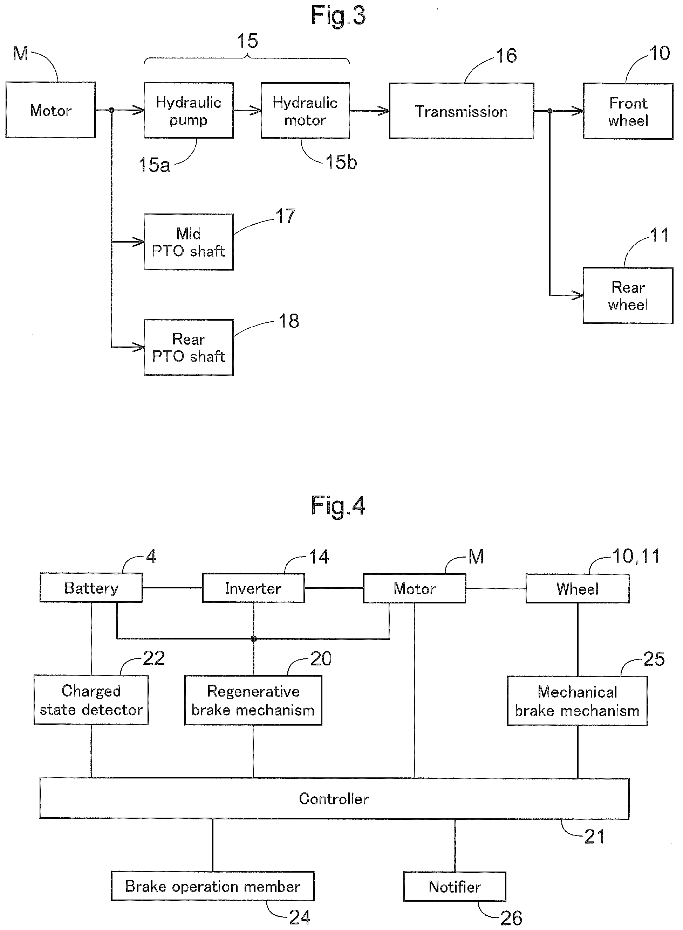

As illustrated in Figs. 2 and 3, the tractor includes a hydrostatic, continuously variable transmission 15 and a transmission 16. As illustrated in Fig. 3, the continuously variable transmission 15 includes a hydraulic pump 15a and a hydraulic motor 15b.

The hydraulic pump 15a is drivable by rotation motive power from the motor M. The hydraulic motor 15b outputs rotation motive power in response to the hydraulic pump 15a being driven. The continuously variable transmission 15 is configured to vary rotation motive power between the hydraulic pump 15a and the hydraulic motor 15b The continuously variable transmission 15 is configured to change its change gear ratio steplessly.

The hydraulic motor 15b outputs rotation motive power to the transmission 16, which then varies the rotation motive power with use of its gear-type transmission mechanism and distributes the varied rotation motive power to the front and rear wheels 10 and 11 to drive the front and rear wheels 10 and 11.

As illustrated in Figs. 2 and 3, the tractor includes a mid PTO shaft 17 and a rear PTO shaft 18. The motor M distributes rotation motive power not only to the hydraulic pump 15a, but also to the mid and rear PTO shafts 17 and 18 to rotate the mid and rear PTO shafts 17 and 18.

Connecting an implement to either of the mid and rear PTO shafts 17 and 18 allows the implement to be driven on rotation motive power from the shaft. As illustrated in Fig. 2, the present embodiment includes, as an example, a mower device 19 connected to the mid PTO shaft 17 and drivable by rotation motive power therefrom.

### [Motor]

As illustrated in Fig. 4, the inverter 14 converts a direct current from the travel battery 4 into a three-phase alternating current with a predetermined frequency and supplies the alternating current to the motor M. The motor M drives the front and rear wheels 10 and 11 (hereinafter referred to collectively and simply as "wheels") by rotation motive power corresponding to the frequency of the three-phase alternating current.

### [Regenerative Mechanism]

The description below deals with the configuration of a regenerative mechanism with reference to Fig. 4.

The tractor as the present embodiment includes a regenerative brake mechanism 20 configured to cause the motor M to generate electric power with use of rotation motive power for driving the wheels to consume the rotation motive power and decelerate (that is, brake) the body. The regenerative brake mechanism 20, in other words, converts the driving force for the wheels into electric power to brake the body. The regenerative brake mechanism 20 uses rotational resistance for the electric power generation by the motor M to reduce the rotation motive power for driving the wheels and brake the body. The motor M generates an electromotive force (that is, electric power) and supplies the electromotive force to the travel battery 4 (which is an example of the "storage battery") to charge the travel battery 4.

If the motor M should charge the travel battery 4 when the travel battery 4 is fully charged, that is, when the travel battery 4 has already been charged to the upper limit of its capacity for electricity storage, the travel battery 4 would be overcharged, leading to its degradation or breakdown.

The regenerative mechanism for the present embodiment is, in view of the above, configured to restrict the operation by the motor M of charging the travel battery 4 in response to the travel battery 4 having a predetermined charged state. For instance, the regenerative mechanism, in response to the travel battery 4 being fully charged, reduces the torque of the motor M to 0 to prevent the motor M from supplying its electric power (that is, electromotive force) to the travel battery 4 and thereby charging the travel battery 4. The electromotive force from the motor M may be consumed by various resistors before reaching the travel battery 4. In this case, the regenerative mechanism may, in accordance with electric power consumption, control the torque of the motor M so that the torque has a value larger than 0. The regenerative mechanism controls the torque of the motor M so that the motor M supplies substantially no electric power to the travel battery 4.

The above control inhibits the motor M from charging the travel battery 4 when the travel battery 4 has already been charged to the upper limit of its capacity for electricity storage, that is, inhibits the travel battery 4 from being overcharged. This in turn prevents the travel battery 4 from becoming degraded or broken down, and allows the motor M to appropriately charge the travel battery 4 with its electric power (that is, electromotive force).

The regenerative mechanism specifically includes a controller 21 and a charged state detector 22 as well as the regenerative brake mechanism 20.

The controller 21 is configured to control the regenerative brake mechanism 20 and a mechanical brake mechanism 25 in response to a manual operation of a brake operation member 24 in the driver section 3 (see Fig. 1) to decelerate the body.

The controller 21 is also configured to control in accordance with the charged state of the travel battery 4 how the motor M charges the travel battery 4 with electromotive force that the motor M generates when the body is braked.

The tractor may include a notifier 26. The controller 21 is, in this case, configured to cause the notifier 26 to notify the worker of at least either upcoming restriction of the charging operation (that is, reduction of the torque of the motor M to 0) or the charged state (that is, the fully charged state). This facilitates the worker recognizing how the travel battery 4 is being charged.

The charged state detector 22 is configured to detect the charged state of the travel battery 4, which has an upper limit on its capacity for electricity storage, that is, how much it is capable of being charged (how much electric power it is capable of storing). The charged state detector 22, for instance, detects whether the travel battery 4 is fully charged, that is, has been charged to the upper limit of its capacity for electricity storage.

### [Controller]

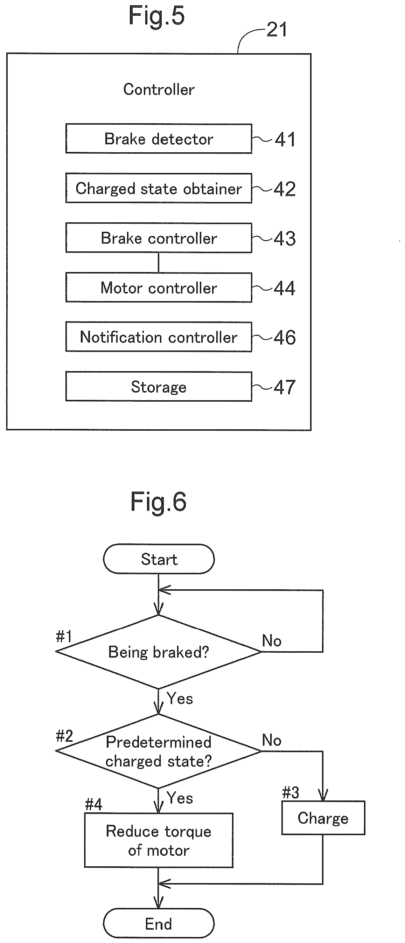

The description below deals with the configuration of the controller 21 with reference to Figs. 4 and 5.

The controller 21 includes a brake detector 41, a charged state obtainer 42, a brake controller 43, a motor controller 44, a notification controller 46, and a storage 47. The controller 21 includes a processor such as a CPU or an EUC.

The brake detector 41 is configured to detect an operation of the brake operation member 24 and the amount of the operation and transmit information on the operation and its amount to the brake controller 43. The charged state obtainer 42 is configured to obtain information on the charged state of the travel battery 4 as detected by the charged state detector 22.

The brake controller 43 is configured to control an operation of braking the body on the basis of the information received from the brake detector 41. Specifically, the brake controller 43 controls the operation of the mechanical brake mechanism 25, and also controls the operation of the regenerative brake mechanism 20 with use of the motor controller 44. The mechanical brake mechanism 25 is configured to slow down the rotation of the wheels with use of friction or the like to decelerate (or brake) the body. The mechanical brake mechanism 25, in other words, converts kinetic energy for driving the tractor into thermal energy to reduce the force of driving the wheels and brake the body. The regenerative brake mechanism 20, as described above, causes the motor M to generate electric power with use of rotation motive power for driving the wheels to decelerate (that is, brake or regeneratively brake) the body. The regenerative brake mechanism 20, in other words, converts kinetic energy for driving the tractor into electric energy to reduce the force of driving the wheels and brake the body.

The brake controller 43 is configured to charge the travel battery 4 with regenerative electric power, that is, an electromotive force that the motor M generates when the body is regeneratively braked. The brake controller 43 is also configured to control (restrict) the operation of charging the travel battery 4 in accordance with the charged state of the travel battery 4 as obtained by the charged state obtainer 42. Specifically, the brake controller 43, with the travel battery 4 fully charged, controls the motor controller 44 to reduce the torque of the motor M (which generates an electromotive force to be supplied to the storage battery) to 0 and inhibit the travel battery 4 from being charged with the electromotive force (that is, regenerative electric power) from the motor M.

The above operation inhibits the travel battery 4 from being overcharged, that is, being charged when the travel battery 4 is fully charged. This in turn prevents the travel battery 4 from becoming degraded or broken down, and allows the motor M to appropriately charge the travel battery 4 with its electric power (that is, electromotive force).

The notification controller 46 is configured to control the notifier 26 to cause the notifier 26 to produce a predetermined notification, that is, a notification of at least either the charged state of the travel battery 4 or applied restriction on the operation of charging the travel battery 4 with an electromotive force (that is, regenerative electric power) from the motor M. The charged state is, for example, the fully charged state of the travel battery 4. The restriction is, for example, to the effect that the torque of the motor M is 0.

The storage 47 is configured to store various items of information and programs or the like for controlling the respective operations of different functional blocks. The storage 47 is also configured to store other items of information such as information detected by the brake detector 41 and information on the charged state of the travel battery 4 as obtained by the charged state obtainer 42.

### [Controlling Charging Operation]

With reference to Figs. 4 to 6, the description below deals with a flow of the process of charging the travel battery 4 with an electromotive force (that is, regenerative electric power) from the motor M in accordance with the charged state. For controlling the charging operation, the present invention does not necessarily have the device configuration illustrated in Figs. 4 and 5, and may have any other device configuration.

First, the controller 21 constantly checks while the body is traveling whether the body is being braked. The controller 21, for instance, detects whether the body is being braked on the basis of an operation of the brake operation member 24 as well as information such as a change of the position of the body if the controller 21 is able to obtain information on the number of revolutions of the drive shaft of each wheel or on the position of the body (step #1 in Fig. 6).

If the controller 21 has determined that the body is being braked (Yes in step #1 in Fig. 6), the controller 21 checks whether the travel battery 4 is fully charged. Specifically, the controller 21 obtains information on the charged state of the travel battery 4 as detected by the charged state detector 22 (step #2 in Fig. 6).

If the travel battery 4 is not fully charged (No in step #2 in Fig. 6), the controller 21 controls the regenerative brake mechanism 20 to supply the travel battery 4 with an electromotive force (that is, regenerative electric power) that the motor M has generated and charge the travel battery 4 (step #3 in Fig. 6).

If the travel battery 4 is fully charged (Yes in step #2 in Fig. 6), the controller 21 controls the regenerative brake mechanism 20 to reduce the torque of the motor M to 0 (step #4 in Fig. 6). This prevents the travel battery 4 from being supplied with an electromotive force (that is, regenerative electric power) that the motor M has generated and from being charged.

The above configuration prevents the travel battery 4 from being charged when the travel battery 4 is fully charged, and inhibits the travel battery 4 from being overcharged. This in turn prevents the travel battery 4 from becoming degraded or broken down, and allows the motor M to appropriately charge the travel battery 4 with its electric power (that is, electromotive force).

### [Alternative Embodiments]

(1) The embodiment described above may be altered such that the controller 21 determines whether to charge the travel battery 4 on the basis of, not whether the travel battery 4 is fully charged, but whether the travel battery 4 has a predetermined charged state. The controller 21 may, in this case, reduce the amount of electric power to be supplied to the travel battery 4 in accordance with the charged state. The controller 21 may reduce electric power continuously or stepwise in accordance with the charged state. The controller 21 may reduce electric power only in response to the remaining charge being equal to or smaller than a predetermined level. These configurations each allow the controller 21 to more finely adjust the amount of electric power to be supplied to the travel battery 4, and allow the motor M to more appropriately charge the travel battery 4 with its electric power (that is, electromotive force).

The charged state detector 22 may alternatively be configured to, for instance, detect as the charged state of the travel battery 4 the charged rate of the travel battery 4, which is the proportion of the amount of charge relative to the capacity of the travel battery 4 for electricity storage. The controller 21 may, in this case, reduce the amount of electric power to be supplied to the travel battery 4 in accordance with the proportion of the amount of charge by means of, for example, control of the torque of the motor M. The controller 21 may alternatively restrict the amount of electric power to be supplied to the travel battery 4 in accordance with the proportion of the amount of charge in response to the proportion being equal to or larger than a predetermined level. The controller 21 may reduce the torque of the motor M to 0 in response to the charged rate of the travel battery 4 being equal to or larger than a predetermined level, for example, 90%.

The above configuration inhibits the travel battery 4 from being charged when the charged rate of the travel battery 4 has a predetermined level lower than the fully charged level. This places the controller 21 on the safer side in inhibiting the travel battery 4 from being overcharged, and allows the motor M to more appropriately charge the travel battery 4 with its electric power (that is, electromotive force).

(2) Each implementation above may be altered such that the controller 21 restricts (or inhibits) the operation of charging the travel battery 4 by reducing the torque of the motor M to a level other than 0. The controller 21 may be configured, in particular, to reduce the torque by an amount gradually larger in accordance with the charged rate (that is, charged state) of the travel battery 4. This allows the controller 21 to control the amount of charge up to the fully charged state in smaller units and more appropriately control the operation of charging the travel battery 4. In this case, the storage 47 may store information on a table indicative of the relationship between the charged rate and the torque, so that the controller 21 refers to the table in controlling the torque of the motor M in accordance with the charged rate.

(3) The travel battery 4 for each implementation above is a device capable of being charged and discharged, for example, a secondary battery such as a storage battery or a capacitor.

(4) Each implementation above may omit the mechanical brake mechanism 25, and may optionally include another mechanism configured to brake the body. Further, the regenerative brake mechanism 20 may be configured not to brake the body, and may be configured to convert any motive power into electric power for use to charge the travel battery 4.

Each implementation above may omit the brake operation member 24, and may be configured to decelerate the body in response to an operation of, for example, a speed change operation member. Each implementation above may be configured to decelerate the body on the basis of the program for autonomous travel. In this case as well, the regenerative mechanism restricts the operation of charging the travel battery 4 in accordance with the charged state.

Using any of the above configurations allows the motor M to appropriately charge the travel battery 4 with its electric power (that is, electromotive force) for an electric work vehicle configured to travel in any manner.

(5) Each implementation above may include crawler travel devices instead of wheels as its travel device.

(6) Each implementation above may alternatively be configured to not only reduce the torque of the motor M, but also consume, in any manner, electric power (that is, electromotive force) generated by the motor M in response to the travel battery 4 having a predetermined charged state. Each implementation above may consume electric power, for instance, with use of a resistor or to operate a PTO mechanism including, for example, the mid PTO shaft 17 or the rear PTO shaft 18.

The above configuration not only reduces the torque of the motor M, but also consumes the electromotive force of the motor M with use of another mechanism. This makes it possible to inhibit the operation of charging the travel battery 4 more appropriately.

(7) For each of the embodiments described above, the regenerative mechanism and the controller 21 do not necessarily include functional blocks such as the above, and may include any functional blocks. The functional blocks of the regenerative mechanism and the controller 21 may, for instance, each be divided further, or a portion of or the entire functional block may be combined with another functional block. The functions of the regenerative mechanism and the controller 21 are not necessarily performed by the above functional blocks, and may each be performed by any functional block. Further, one or more or all of the functions of the regenerative mechanism and the controller 21 may be performed by software. Programs as such software are stored in a storage device such as the storage 47 and executed by a processor included in the controller 21 such as a CPU or a separate processor.

### Industrial Applicability

The present invention is applicable to electrically operated agricultural work vehicles such as harvesters (for example, tractors) and rice transplanters as well as various electric work vehicles configured to travel as electrically operated and perform various types of work.

### Reference Signs List

- 4: Travel battery (storage battery)
- 10: Front wheel (travel device)
- 11: Rear wheel (travel device)
- 20: Regenerative brake mechanism
- 21: Controller
- 22: Charged state detector
- 26: Notifier
- M: Motor

## Claims

1. An electric work vehicle, comprising:
a storage battery configured to be charged and discharged;
a motor drivable by electric power from the storage battery;
a travel device drivable by the motor;
a regenerative mechanism configured to charge the storage battery with electric power that the motor generates when a body of the electric work vehicle is decelerated;
a charged state detector configured to detect a charged state of the storage battery; and
a controller configured to, in accordance with the charged state detected by the charged state detector, reduce torque of the motor when the motor generates the electric power to be supplied to the storage battery.

2. The electric work vehicle according to claim 1, wherein
the controller reduces the torque to 0 in response to the charged state being a state in which the storage battery is charged to an upper limit of a capacity for electricity storage.

3. The electric work vehicle according to claim 1, wherein
in response to the charged state being a state in which the storage battery is charged to a level equal to or larger than a predetermined proportion of a capacity for electricity storage, the controller reduces the torque in accordance with the proportion.

4. The electric work vehicle according to claim 3, wherein
the controller reduces the torque to 0 in response to the proportion being equal to or larger than 90% of the capacity.

5. The electric work vehicle according to any one of claims 1 to 4, wherein
the regenerative mechanism includes a regenerative brake mechanism configured to reduce motive power that the motor transmits to the travel device.

6. The electric work vehicle according to any one of claims 1 to 5, further comprising:
a notifier configured to produce a predetermined notification,
wherein the controller causes the notifier to produce a notification of at least either the charged state or the reduction of the torque.
